# FASCICULE DE BREVET EUROPEEN

(11) **EP 0 723 756 B1**
(45) Date de publication et mention de la délivrance du brevet: **15.04.1998**
(21) Numéro de dépôt: 96400120.0
(22) Date de dépôt: 18.01.1996
(51) Int. Cl.: A47J 43/08, A47J 43/07, A47J 43/04

(54) **Appareil électroménager, du type comportant un bol de travail, équipé d'un dispositif de mise en oeuvre d'un procédé de nettoyage de la paroi interne du bol**
Küchenmachine mit einem Arbeitsgefäss mit einer Vorrichtung zum Reinigen der Innenwandung des Arbeitsgefässes
Kitchen apparatus of the type compromising a bowl including a device for realising the cleaning process of the internal wall of the bowl

(30) Priorité: 27.01.1995 FR 9500993
(43) Date de publication de la demande: 31.07.1996
(73) Titulaire: MOULINEX S.A., 75008 Paris (FR)
(72) Inventeur: Trocherie, Jean-Pierre, F-53370 Saint Pierre des Nids (FR)
(74) Mandataire: Busquets, Jean-Pierre

(56) Documents cités:
- EP-A- 0 556 467
- WO-A-94/03912
- DE-A- 4 126 595
- US-A- 5 310 259

## Description

L'invention se rapporte à un appareil électroménager tel que, par exemple, un mixeur, comportant un bol dans lequel tourne un outil de travail entraîné par un moteur logé dans un boîtier, un sélecteur de vitesses propre à commander le circuit d'alimentation du moteur et relié à une manette montée mobile sur le boîtier entre une position d'arrêt et une ou plusieurs positions de fonctionnement, ainsi qu'un dispositif de mise en oeuvre d'un procédé de nettoyage de la paroi interne du bol qui consiste à introduire un liquide de nettoyage jusqu'à recouvrement de l'outil puis à sélectionner une vitesse de rotation de l'outil.

Un appareil électroménager de ce type a été commercialisé par la Demanderesse sous la référence 719, comme indiqué dans son catalogue général 1984.

Dans un tel appareil, le nettoyage de la paroi interne du bol nécessite que la manette soit amenée par l'utilisateur à une position précise, ce qui exige une attention particulière de l'utilisateur et l'utilisation d'un sélecteur de vitesses de construction particulière.

L'invention a pour but de supprimer ces inconvénients et de réaliser un appareil électroménager, du type exposé ci-dessus, utilisant un dispositif de mise en oeuvre du procédé de nettoyage qui soit d'une grande commodité d'utilisation et d'une fabrication simple et économique.

Selon l'invention, l'appareil comporte en outre un organe suiveur monté mobile dans le boîtier et apte à piloter le sélecteur de vitesses, et le dispositif de mise en oeuvre du procédé de nettoyage comporte un organe d'actionnement monté mobile sur le boîtier et pouvant occuper, lorsque la manette est sur la position d'arrêt, deux positions, soit une position active dans laquelle il actionne l'organe suiveur de manière à amener automatiquement le sélecteur de vitesses à la vitesse sélectionnée de nettoyage, soit une position inactive pour laquelle l'organe suiveur peut être actionné par la manette pour commander le sélecteur de vitesses.

Ainsi, grâce à cet organe d'actionnement propre à actionner l'organe suiveur de pilotage du sélecteur de vitesses, il est désormais possible, à la fin d'une préparation culinaire, d'enclencher de façon automatique par un simple geste le procédé de nettoyage du bol, ce qui rend cette fonction très ergonomique. En outre, on peut utiliser un sélecteur de vitesses de construction courante, ce qui permet d'obtenir une réduction du coût de revient de l'appareil.

Les caractéristiques et avantages de l'invention ressortiront d'ailleurs de la description qui va suivre, à titre d'exemple non limitatif, en référence au dessin annexé dans lequel :

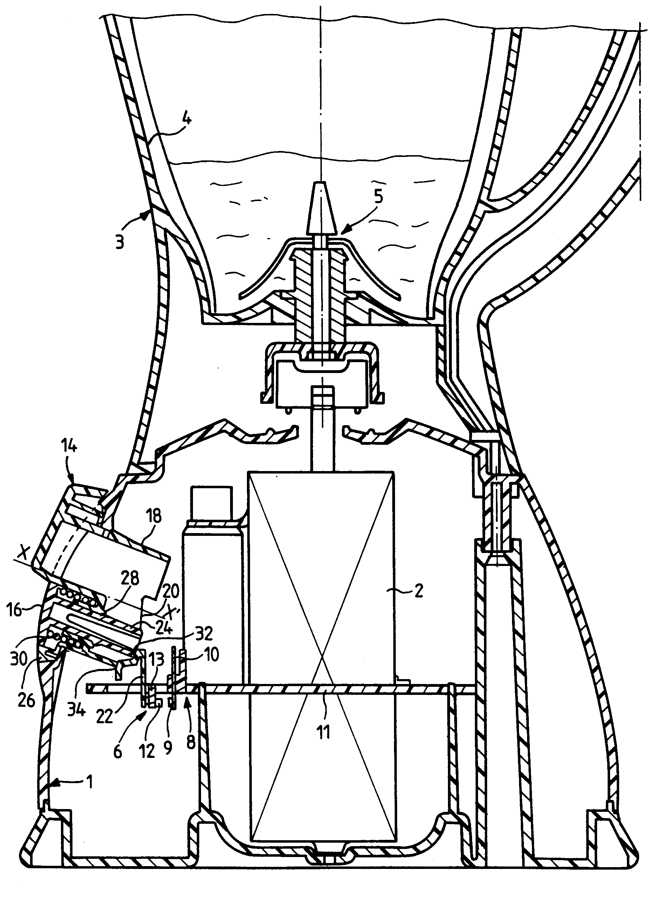

- la figure 1 est une vue partielle en coupe verticale d'un appareil électroménager équipé d'un dispositif de mise en oeuvre d'un procédé de nettoyage selon l'invention.

Comme on le voit sur le dessin, l'appareil électroménager représenté est un mixeur qui comporte un boîtier 1 renfermant un moteur 2 et supportant un bol 3 à paroi interne 4 dans lequel tourne un outil de travail 5 du type à couteaux étagés. Le moteur 2 est équipé d'un sélecteur de vitesses référencé globalement en 6 branché dans le circuit d'alimentation du moteur 2. De façon connue en soi, le sélecteur peut être, soit du type comportant un ou plusieurs interrupteurs adaptés à connecter un ou plusieurs bobinages du moteur afin de faire varier sa vitesse, soit du type électronique comportant un potentiomètre linéaire ou rotatif relié à un TRIAC monté en série avec le moteur.

Sur le dessin, on n'a représenté qu'un seul interrupteur 8 comportant un contact fixe 9 porté par une lame 10 solidaire d'un support 11 du moteur 2 et un contact mobile 12 situé en regard du contact fixe et porté par une lame flexible 13 ancrée sur le support 11 et apte à se déplacer vers le contact fixe sous l'effet d'une contrainte extérieure imposée notamment par la manette 14.

Comme il est connu dans l'art antérieur, la paroi interne 4 du bol 3 peut être nettoyée selon un procédé consistant, par exemple, à la fin d'une opération de préparation culinaire, à introduire un liquide de nettoyage jusqu'à recouvrement de l'outil 5, puis à sélectionner une vitesse particulière de rotation de l'outil au moyen d'une manette 14 montée mobile sur le boîtier 1 entre une position d'arrêt et une ou plusieurs positions de fonctionnement, et reliée au sélecteur de vitesse 6. En la position d'arrêt le sélecteur coupe le circuit d'alimentation du moteur 2.

Cette vitesse sélectionnée correspond à une vitesse de rotation de l'outil 5 apte à créer un tourbillon qui balaye et décolle les ingrédients attachés à la paroi interne 4 du bol.

Selon l'invention, l'appareil est équipé d'un dispositif de mise en oeuvre du procédé de nettoyage qui comporte en outre un organe d'actionnement 16 monté mobile sur le boîtier 1 et pouvant occuper, lorsque la manette 14 est sur la position d'arrêt, deux positions, soit une position active pour laquelle le sélecteur de vitesse 6 est amené automatiquement à ladite vitesse sélectionnée pour le nettoyage, soit une position inactive (représentée sur le dessin) pour laquelle ledit sélecteur de vitesses peut être commandé par la manette 14.

Dans l'exemple de réalisation représenté, la manette 14 est montée rotative autour d'un axe X-X' orthogonal au boîtier et comporte un fût 18 dont l'extrémité interne présente une came 20 de commande d'un organe suiveur 22 monté mobile et apte à piloter la lame flexible 13 portant le contact mobile 12, et l'organe d'actionnement 16 comporte un doigt 24 qui vient agir directement sur l'organe suiveur 22 pour amener automatiquement le sélecteur 6 à la vitesse sélectionnée de nettoyage, c'est-à-dire dans le cas présent à une vitesse de l'ordre de 20000 tours correspondant pratiquement à la vitesse maximum du moteur électrique.

Selon une réalisation préférée de l'invention, la manette 14 et l'organe d'actionnement 16 constituent un ensemble dans lequel la manette 14 comporte un chapeau 26, rattaché au fût 18, qui présente un contour circulaire à section hémisphérique et qui comprend un logement traversant 28 dans lequel est monté mobile l'organe d'actionnement 16.

Comme on le voit sur le dessin, l'organe suiveur 22 présente en coupe verticale un profil étagé et est rattaché au support 11 par un bras élastique (non représenté) qui tend à maintenir le contact de l'organe suiveur 22 avec la came 20. Ce profil étagé est formé par deux marches 32 et 34 adaptées respectivement à venir en contact avec le doigt 24 et la came 20. Comme on le comprendra, la manette 14 présente une rotation limitée angulairement autour de l'axe XX' de manière à garantir l'appui de la came 20 et du doigt 14 sur l'organe suiveur 22 pour les différentes vitesses sélectionnées par l'utilisateur.

De préférence, l'organe d'actionnement 16 est constitué par un poussoir monté coulissant dans le logement 28 à l'encontre d'un moyen élastique 30 tel qu'un ressort à boudins et son extrémité interne forme le doigt 24 d'actionnement de l'organe suiveur 22.

Lorsque l'utilisateur veut terminer l'opération de mixage de la préparation contenue dans le bol 3, il amène la manette 14 de la position choisie pour cette opération à la position d'arrêt correspondant à la mise hors tension du moteur 2. Au cours de ce mouvement de la manette 14, la came 20 amène l'organe suiveur 22 en une position telle que le contact 12 est écarté du contact fixe 9 et partant le sélecteur 6 coupe l'alimentation du moteur 2.

Pour procéder au nettoyage de la paroi 4 du bol après la préparation, l'utilisateur, introduit un liquide de nettoyage, qui pourrait être seulement de l'eau, jusqu'à recouvrement de l'outil 5. Puis, par un simple geste, il amène le poussoir 16 à l'encontre du ressort 30, en sa position active en laquelle le doigt 24 appuie sur la marche 32 et consécutivement l'organe suiveur ferme l'interrupteur 8 amenant ainsi automatiquement le sélecteur de vitesse à la vitesse sélectionnée pour le nettoyage. Le moteur 2 entraîne ainsi l'outil 5 à grande vitesse de manière à créer un tourbillon qui par sa force va nettoyer complètement la paroi 4.

Pour arrêter cette opération de nettoyage, l'utilisateur relâche la pression sur le poussoir 16, l'amenant ainsi en sa position inactive pour laquelle le sélecteur de vitesse peut être de nouveau commandé par la manette 14 pour une future utilisation.

## Revendications

1. Appareil électroménager tel que, par exemple, un mixeur, comportant un bol (3) dans lequel tourne un outil de travail (5) entraîné par un moteur (2) logé dans un boîtier (1), un sélecteur de vitesses (6) propre à commander le circuit d'alimentation du moteur et relié à une manette (14) montée mobile sur le boîtier entre une position d'arrêt et une ou plusieurs positions de fonctionnement, ainsi qu'un dispositif de mise en oeuvre d'un procédé de nettoyage de la paroi interne (4) du bol (3) qui consiste à introduire un liquide de nettoyage jusqu'à recouvrement de l'outil (5) puis à sélectionner une vitesse de rotation de l'outil,
**caractérisé en ce qu'**il comporte en outre un organe suiveur (22) monté mobile dans le boîtier (1) et apte à piloter le sélecteur de vitesses (6), et en ce que le dispositif de mise en oeuvre du procédé de nettoyage comporte un organe d'actionnement (16) monté mobile sur le boîtier (1) et pouvant occuper, lorsque la manette (14) est sur la position d'arrêt, deux positions, soit une position active dans laquelle il actionne l'organe suiveur (22) de manière à amener automatiquement le sélecteur de vitesses (6) à la vitesse sélectionnée de nettoyage, soit une position inactive pour laquelle l'organe suiveur (22) peut être actionné par la manette (14) pour commander le sélecteur de vitesses (6).

2. Appareil électroménager selon la revendication 1,
**caractérisé en ce que** la manette (14) est montée rotative autour d'un axe (X-X') orthogonal au boîtier (1) et comporte un fût (18) dont l'extrémité présente une came (20) de commande de l'organe suiveur (22), et l'organe d'actionnement (16) comporte un doigt (24) qui vient agir directement sur l'organe suiveur (22) pour amener automatiquement le sélecteur (6) à la vitesse sélectionnée de nettoyage.

3. Appareil électroménager selon la revendication 2,
**caractérisé en ce que** la manette (14) et l'organe d'actionnement (16) constituent un ensemble dans lequel la manette (14) comporte un chapeau (26) présentant un contour circulaire et comprenant un logement traversant (28) dans lequel est monté l'organe d'actionnement (16).

4. Appareil électroménager selon la revendication 3,
**caractérisé en ce que** l'organe d'actionnement (16) est un poussoir monté coulissant dans le logement (28) à l'encontre d'un moyen élastique (30).

5. Appareil électroménager selon la revendication 4,
**caractérisé en ce que** l'organe suiveur (22) présente en coupe verticale un profil étagé formé par deux marches (32) et (34) adaptées respectivement à venir en contact avec le doigt (24) et la came (20).

6. Appareil électroménager selon l'une quelconque des revendications précédentes,
**caractérisé en ce que** la vitesse sélectionnée pour le nettoyage de la paroi du bol est de l'ordre de 12.000 tours par minute.

7. Appareil électroménager selon l'une quelconque des revendications précédentes,
**caractérisé en ce que** le sélecteur de vitesses (6) comporte au moins un interrupteur (8) comportant un contact fixe (9) porté par une lame (10) solidaire d'un support (11) du moteur (2), et un contact mobile (12) situé en regard du contact fixe et porté par une lame flexible (13) ancrée sur le support (11) et apte à se déplacer vers le contact fixe sous l'effet d'une contrainte extérieure imposée par la manette (14) ou l'organe d'actionnement (16).

## Claims

1. Domestic electrical appliance such as, for example, a mixer, comprising a bowl (3) in which rotates a working tool (5) driven by a motor (2) housed in a casing (1), a speed selector (6) suitable for controlling the motor power supply circuit and connected to a hand lever (14) mounted on the casing so as to move between a stop position and one or more operating positions, and a device for implementing a process of cleaning the internal wall (4) of the bowl (3) which consists of introducing a cleaning liquid until the tool (5) is covered and then selecting a tool rotation speed,
**characterised in that** it also comprises a monitoring member (22) movably mounted in the casing (1) and able to control the speed selector (6), and in that the device for implementing the cleaning process comprises an operating member (16) movably mounted on the casing (1) and able to occupy, when the hand lever (14) is on the stop position, two positions, that is to say an active position in which it operates the monitoring member (22) so as to bring the speed selector (6) automatically to the selected cleaning speed, or an inactive position in which the monitoring member (22) can be actuated by the hand lever (14) in order to control the speed selector (6).

2. Domestic electrical appliance according to claim 1,
**characterised in that** the hand lever (14) is mounted so as to rotate about an axis (X-X') orthogonal to the casing (1) and comprises a barrel (18), the end of which has a cam (20) for controlling the monitoring member (22), and the operating member (16) comprises a pin (24) which comes to act directly on the monitoring member (22) in order to bring the selector (6) automatically to the selected cleaning speed.

3. Domestic electrical appliance according to claim 2,
**characterised in that** the hand lever (14) and the operating member (16) constitute an assembly in which the hand lever (14) has a cap (26) with a circular contour and comprising a housing (28) passing through it, in which the operating member (16) is mounted.

4. Domestic electrical appliance according to claim 3,
**characterised in that** the operating member (16) is a pusher mounted in the housing (28) so as to slide against an elastic means (30).

5. Domestic electrical appliance according to claim 4,
**characterised in that** the monitoring member (22) has in vertical section a stepped profile formed by two steps (32) and (34) adapted respectively to come into contact with the pin (24) and the cam (20).

6. Domestic electrical appliance according to any one of the preceding claims,
**characterised in that** the speed selected for cleaning the wall of the bowl is around 12,000 revolutions per minute.

7. Domestic electrical appliance according to any one of the preceding claims,
**characterised in that** the speed selector (6) comprises at least one switch (8) having a fixed contact (9) carried by a blade (10) integral with a support (11) of the motor (2), and a moving contact (12) situated opposite the fixed contact and carried by a flexible blade (13) anchored on the support (11) and able to move towards the fixed contact under the effect of an external force imposed by the hand lever (14) or the operating member (16).

## Patentansprüche

1. Elektro-Küchengerät wie beispielsweise ein Mixer, mit einem Gefäß (3), in welchem sich ein Arbeitswerkzeug (5) dreht, das durch einen in einem Gehäuse (1) eingebetteten Motor (2) angetrieben ist, einem Geschwindigkeitsregler (6), der die Stromversorgung des Motors steuert und mit einem Knopf (14) verbunden ist, der am Gehäuse zwischen einer Stopstellung und einer oder mehreren Betriebsstellungen beweglich montiert ist, sowie einer Vorrichtung zur Durchführung eines Reinigungsprozesses der Innenwand (4) des Gefäßes (3), der darin besteht, eine Reinigungsflüssigkeit bis zur Bedeckung des Werkzeuges (5) einzufüllen und dann eine Drehgeschwindigkeit des Werkzeugs auszuwählen, **dadurch gekennzeichnet, daß** es außerdem ein am Gehäuse (1) beweglich montiertes Folgeelement (22) aufweist, das den Geschwindigkeitsregler (6) steuert, und daß die Vorrichtung zur Durchführung des Reinigungsprozesses ein am Gehäuse (1) beweglich montiertes Betätigungselement (16) aufweist, das bei Stopstellung des Knopfes (14) zwei Stellungen einnehmen kann, nämlich eine aktive Stellung, in welcher es das Folgeelement (22) so beaufschlagt, das der Geschwindigkeitsregler (6) automatisch auf die ausgewählte Reinigungsgeschwindigkeit gebracht wird, und eine inaktive Stellung, in welcher das Folgeelement (22) zur Steuerung des Geschwindigkeitsreglers (6) vom Knopf (14) beaufschlagt werden kann.

2. Elektro-Küchengerät nach Anspruch 1, **dadurch gekennzeichnet, daß** der Knopf (14) um eine zum Gehäuse (1) senkrechte Achse (X-X') drehbar montiert ist und einen Schaft (18) aufweist, dessen Ende eine Nocke (20) zur Steuerung eines Folgeelements (22) aufweist, und daß das Betätigungselement (16) einen Finger (24) aufweist, der direkt auf das Folgeelement (22) wirkt, um den Regler (6) automatisch auf die ausgewählte Reinigungsgeschwindigkeit zu bringen.

3. Elektro-Küchengerät nach Anspruch 2, **dadurch gekennzeichnet, daß** der Knopf (14) und das Betätigungselement (16) eine Einheit bilden, in welcher der Knopf (14) eine Haube (26) mit kreisförmigem Umriß und einer durchsetzenden Aussparung (28) aufweist, in welcher das Betätigungselement (16) montiert ist.

4. Elektro-Küchengerät nach Anspruch 3, **dadurch gekennzeichnet, daß** das Betätigungselement (16) ein in der Aussparung (28) gegen ein elastisches Element (30) verschiebbar montierter Druckknopf ist.

5. Elektro-Küchengerät nach Anspruch 4, **dadurch gekennzeichnet, daß** das Folgeelement (22) im Vertikalschnitt ein gestuftes Profil aufweist, das durch zwei Stufen (32) und (34) gebildet ist, die jeweils mit dem Finger (24) und der Nocke (20) in Kontakt kommen.

6. Elektro-Küchengerät nach einem der vorangehenden Ansprüche, **dadurch gekennzeichnet, daß** die für die Reinigung der Gefäßwand ausgewählte Geschwindigkeit bei etwa 12.000 Umdrehungen pro Minute liegt.

7. Elektro-Küchengerät nach einem der vorangehenden Ansprüche, **dadurch gekennzeichnet, daß** der Geschwindigkeitsregler (6) mindestens einen Schalter (8) aufweist, der einen festen Kontakt (9), der von einer mit einem Träger (11) des Motors (2) fest verbundenen Zunge (10) getragen ist, und einen beweglichen Kontakt (12) aufweist, der gegenüber dem festen Kontakt angeordnet ist und von einer am Träger (11) verankerten flexiblen Zunge (13) getragen ist und sich unter der Wirkung einer durch den Knopf (14) oder das Betätigungselement (16) ausgeübten äußeren Kraft zum festen Kontakt verschieben kann.
